# EUROPÄISCHE PATENTANMELDUNG

(11) **EP 2 175 235 A2**
(43) Veröffentlichungstag der Anmeldung: **14.04.2010**
(21) Anmeldenummer: 09075447.4
(22) Anmeldetag: 27.09.2009
(51) Int. Cl.: G01C 11/02

(54) **Systeme zur automatisierten Erfassung von Schrägluftbildern**

(30) Priorität: 29.09.2008 DE 102008049438; 14.07.2009 DE 102009009741
(71) Anmelder: Alpha Luftbild Gmbh, ., 10435 Berlin (DE)
(72) Erfinder: Henrik Pohl, 10435 Berlin (DE)
(74) Vertreter: Wehlan, Helmut

(57) **Zusammenfassung**

Die Erfindung bezieht sich auf Systeme zur automatisierten Erfassung von Schrägluftbildern in einem Überflug (AOS: Aero-Oblique-System). Diese Schrägluftbilder werden zur Generierung von 3D-Stadtmodellen, zur flächendeckenden Präsentation von Stadtlandschaften für den Katastrophenschutz und für Geo-Informationssysteme benötigt. Das AOS besteht aus einer rotierenden Kugelkalotte, in der sich Kameras befinden, die zueinander exakt orientiert sind. In diesen Systemen sind maximal drei Kameras mit 39 Mega Pixel und minimal eine Kamera mit 12 Mega Pixel enthalten. Die Erfassung von Luftbildern bei Bildflügen geschieht dadurch, dass AOS mit ein bis drei Kameras zur automatisierten Erfassung von Schrägluftbildern mithilfe einer eine Kugelkalotte steuernden Rotations-Kinematik eingesetzt werden.

## Beschreibung

Die Erfindung betrifft Systeme zur automatisierten Erfassung von Schrägluftbildern in einem Überflug (AOS: Aero-Oblique-System). Diese Schrägluftbilder werden zur Generierung von 3D-Stadtmodellen, zur flächendeckenden Präsentation von Stadtlandschaften für den

Katastrophenschutz und für Geo-Informationssysteme benötigt.

Der Bedarf an der Erstellung von 3D-Stadtmodellen steigt zunehmend. Dieser Bereich der flächendeckenden Präsentation von Stadtlandschaften erlebt zur Zeit einen Boom mit einem sehr großen Wachstumspotential.

Die von der Fima Microsoft (mit "Virtual Earth") und von der Blom-Gruppe (Produkt "PICTOMETRY") verwendeten Systeme bestehen aus fünf digitalen Industriekameras (16 Mega Pixel). Eine Kamera sieht nach unten und die anderen vier im Abstand von 90° mit einem Blickwinkel von 40° schräg nach unten. Mit dieser Anordnung werden alle Objekte während eines zeilenförmig erfolgenden Bildfluges erfasst. Dabei können nur hierzu ausgestattete Flugzeuge eingesetzt werden. Weiterhin dient eine spezielle Software zur Orientierung und

Zuordnung aller erzeugten Schrägluftbilder (www.blomasa.com/germany/de). Firmen, die sich diesen Markt ebenfalls erschließen wollen, befinden sich in der Entwicklung entsprechender Softwarelösungen zur Orientierung und Zuordnung der Schrägluftbilder (www.geocontent.de).

In der Photogrammetrie besteht häufig die Aufgabe, zentralperspektive Bilder in Orthophotos umzuwandeln, d.h. in orthogonale Parallelprojektionen, um beispielsweise Luftbilder in den Grundriss einer topographischen Karte zu projizieren (Patentschrift DE 10346352 A1: Verfahren zur Abbildung räumlicher Objekte in Parallelprojektion). Die hierzu entwickelten Methoden der Differentialentzerrung setzen ein digitales Geländemodell voraus, das die Geländeoberfläche geometrisch beschreibt. Dabei bleiben aus der Geländefläche herausragende Objekte, wie Gebäude, Bäume oder Brücken unberücksichtigt; sie werden deshalb nicht grundrissgetreu wiedergegeben. Zur Verbesserung des Ergebnisses müssen derartige Objekte in einem Digitalen Oberflächenmodell (DOM) erfasst und damit "True Orthophotos" erzeugt werden. Durch die Bildaufnahme mit zeilenweise arbeitenden digitalen Kameras kann man aber auch Bilddaten gewinnen, die in einer Richtung bereits Parallelprojektionen darstellen. Wenn zwei in zueinander senkrechten Richtungen aufgezeichnete Bildstreifen kombiniert werden, lassen sich daraus "True Orthophotos" ableiten, ohne dass ein DOM erforderlich ist. Das Verfahren kann vom Flugzeug aus zur Geländeaufnahme oder im Nahbereich, z.B. an Architekturfassaden, eingesetzt werden.

Zur Zeit gibt es kein System zur automatisierten Erfassung von Schrägluftbildern, das in alle

Flugzeuge der Luftbildfirmen eingebaut werden kann.

Der Erfindung liegt die Aufgabe zugrunde, eine verbesserte Erfassung von Luftbildern zu ermöglichen. Die Aufgabe wurde erfindungsgemäß durch ein allgemein einsetzbares System zur automatisierten Erfassung von Schrägluftbildern gelöst, im folgenden "Aero-Oblique-System" (AOS) genannt.

Das erfindungsgemäße AOS besteht aus einer rotierenden Kugelkalotte, in der sich Kameras befinden, die zueinander exakt orientiert sind, ferner aus einer digitalen Messkammer, einer Kameraplattform, einem Einbauschacht sowie einem Fluggerät mit Bodenluken zur Aufnahme der Plattform und eines Laser-Scanners.

Das AOS ist in zwei Varianten entwickelt worden. In diesen Systemen sind maximal drei Kameras und minimal eine Kamera enthalten. Damit ist gewährleistet, dass je nach Einsatzweck ein AOS ausgewählt werden kann.

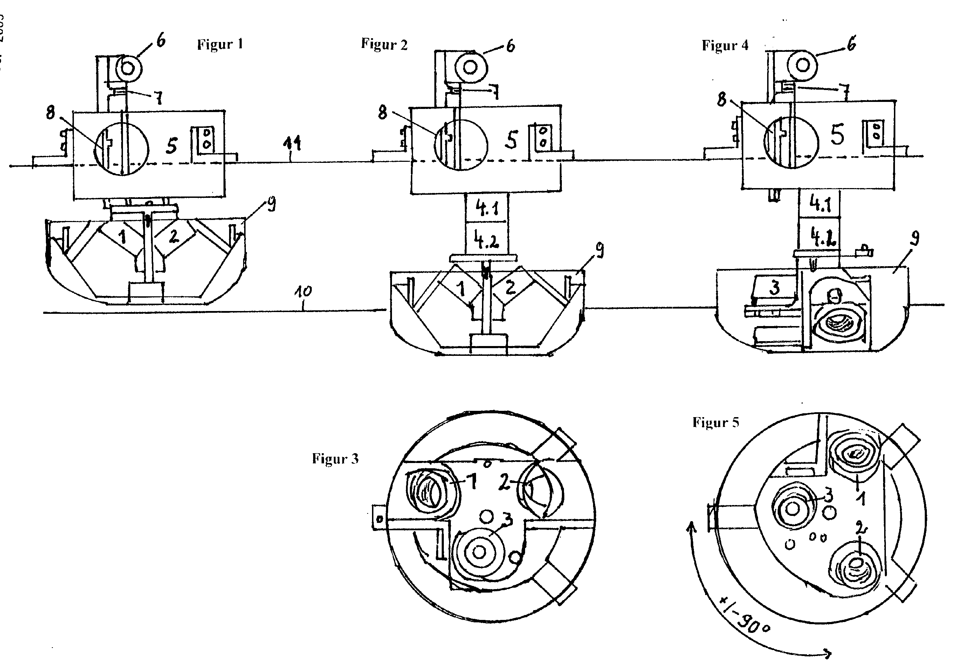

Das AOS besteht aus einer rotierenden Kugelkalotte (Kamerakopf), in der sich die Kameras befinden (Figur 3).

Das System lässt sich auf vorhandenen Plattformen in allen Fluggeräten, die für den Bildflug zugelassen sind, montieren, ohne dort Umbauten vornehmen zu müssen. Die Auslösung der Kameras erfolgt über vorhandene Flugführungssysteme zur Navigation auf der vorher geplanten Flugtrasse (Flight Management Systems).

Das AOS mit nur einer Kamera wurde für den Einsatz an kleineren Flugzeugen außerhalb der

Flugzeugzelle entwickelt.

Hard- und Software zur Steuerung der Kinematik und die Bilddatenspeicherung des AOS befinden sich im Gerät. Es gibt nur drei Zuleitungen:
1. Stromversorgung
2. Auslösung und
3. Auslöserückmeldung.

Ein entscheidender und überraschender Vorteil des erfindungsgemäßen AOS liegt darin, dass es mit maximal drei Kameras mit je 39 Mega Pixel arbeitet und so deutlich weniger Platz beansprucht; dies gilt insbesondere für die Öffnung im Boden des Flugzeuges. Das System PICTOMETRY (Blom-Gruppe) arbeitet mit fünf Kameras mit nur 16 Mega Pixel, die mehr Raum benötigen. Der Wegfall von zwei Kameras wird gemäß der vorliegenden Erfindung durch eine neu entwickelte Rotations-Kinematik kompensiert. Die Einsparung von Kameras bei dem AOS mit nur einer Kamera folgt dem gleichen Prinzip.

Die neu entwickelte Rotations-Kinematik (Rotationskinematik PIC: Jeder Punkt P dreht sich im Kreis mit gleichem Zentrum und gleicher Winkelgeschwindigkeit, gem. uni-ka.the-jens.de/html/exphysl/exse7.htm) bedeutet im Rahmen dieser Erfindung: Um mit drei Kameras ein Senkrechtluftbild und Schrägluftbilder aus allen vier Richtungen erzeugen zu können, wird der Kamerakopf (die Kugelkalotte) nach festen Intervallen um je 90° vor- und zurückgedreht (Figur 4).

Das erfindungsgemäße Verfahren zur Erfassung von Luftbildern bei Bildflügen besteht darin, dass AOS - Aero-Oblique-System - mit ein bis drei Kameras zur automatisierten Erfassung von Schrägluftbildern mithilfe einer eine Kugelkalotte steuernden Rotations-Kinematik eingesetzt werden.

Das erfindungsgemäße AOS ist in zwei Ausführungsformen entwickelt worden: mit maximal drei Kameras mit 39 Mega Pixel und minimal einer Kamera mit 12 Mega Pixel.

Das AOS mit drei Kameras hat zwei weniger als das PICTOMETRY-System; es resultieren unerwarteterweise geringere Anschaffungskosten, ein kleineres Gewicht und weniger Platzbedarf.

Das erfindungsgemäße AOS hat eine fast vierfache Auflösung. Dies hat zur Folge, dass weiniger Aufnahmen pro Fläche während des Bildfluges erzeugt werden müssen; zudem werden Kosten im Flugbetrieb und bei der Auswertung der Schrägluftbilder eingespart. Die wichtigsten und unerwarteterweise eingetretenen Vorteile lassen sich wie folgt zusammenfassen:
1. geringere Anschaffungskosten
2. mehr als doppelte Auflösung der digitalen Kameras
3. Einsparungen bei den Flugbetriebs- und Bearbeitungskosten durch eine größere Flächenerfassung
4. ein Einbau in alle üblichen Bildflugzeuge ist möglich.

Das AOS mit nur einer Kamera lässt sich nicht mit dem PICTOMETRY-System vergleichen, da es eine Sonderstellung einnimmt. Es ist eine low-cost-Lösung für geringere Anforderungen und für die Erfassung von kleineren Flächen. - Eine vergleichbare Anwendung ist bisher nicht bekannt.

Die im Rahmen dieser Erfindung entwickelte neue Rotations-Kinematik ermöglicht den Einsatz von weniger Kameras als bei den starren Systemen mit fünf Kameras. Da sich die Kugelkalotte im Wechsel von 90° um die Hochachse vor- und zurückdreht, werden die Sichten nach vom und hinten sowie nach rechts und links mit zwei Kameras gewährleistet. Die dritte dient, wenn notwendig, der Senkrechtsicht zur Verknüpfung der Schrägluftbilder.

Eine weitere erfinderische Ausgestaltung liegt in der Hubmechanik zum Absenken der Kugelkalotte bei Erreichen des Bildfluggebietes. Um Schrägsichten aus einem Flugzeug gewähren zu können, müssen die Objektive teilweise aus der Rumpfunterseite des Flugzeuges herausragen. Sie befinden sich dann im Luftstrom; bei Starts und Landungen werden kleine und kleinste Schmutzpartikel aufgewirbelt, die zur Verschmutzung und Beschädigung der Objektive führen. Des Weiteren erhöht sich der Luftwiderstand des Flugzeuges. Um dies zur verhindern, wird bei Starts, Landungen und den An-/ bzw. Abflügen der Kamerakopf (die Kugelkalotte) mittels der Hubmechanik in das Flugzeuginnere gefahren, so dass die Bodenluke während dieser Flugphasen geschlossen werden kann.

Die Merkmale der Erfindung gehen aus den Elementen der Ansprüche und aus der Beschreibung hervor, wobei sowohl einzelne Merkmale als auch mehrere in Form von Kombinationen vorteilhafte Ausführungen darstellen, für die mit dieser Schrift Schutz beantragt wird. Das Wesen der Erfindung besteht in einer Kombination aus bekannten (Luftbilder, 3D-Modelle, Bildflug, Kugelkalotte / Kamerakopf) und neuen Elementen (AOS, automatisierte Erfassung von Schrägluftbildem, Rotations-Kinematik für bis zu drei Kameras, Hubmechanik zum Absenken der Kugelkalotte bei Erreichen des Bildfluggebietes), die sich gegenseitig beeinflussen und in ihrer neuen Gesamtwirkung einen Gebrauchsvorteil und den erstrebten Erfolg ergeben, der darin liegt, dass die erfindungsgemäßen Systeme zur automatisierten Erfassung von Schrägluftbildern überraschend leicht, schnell und unproblematisch auf alle Geräte von Luftbildfirmen übertragen und in alle Fluggeräte, die für den Bildflug zugelassen sind, montiert werden können.

Das Wesen der Erfindung besteht in Systemen und Verfahren zur Erfassung von Luftbildern bei Bildflügen mithilfe von AOS - Aero-Oblique-System - mit ein bis drei Kameras, vorzugsweise drei oder eine, zur automatisierten Erfassung von Schrägluftbildern durch eine die Kameras enthaltende rotierende Kugelkalotte und eine die Kugelkalotte steuernde Rotations-Kinematik. Das erfindungsgemäße AOS besteht aus einer rotierenden Kugelkalotte, in der sich Kameras befinden, die zueinander exakt orientiert sind; ferner besteht es aus einer digitalen Messkammer, einer Kameraplattform, einem Einbauschacht sowie einem Fluggerät mit Bodenluken zur

Aufnahme der Plattform und eines Laser-Scanners. Die erfindungsgemäßen Systeme enthalten maximal drei Kameras mit 39 Mega Pixel oder minimal eine Kamera mit 12 Mega Pixel. Die erfindungsgemäße Rotations-Kinematik macht es möglich, aus drei Kameras ein Senkrechtluftbild und Schrägluftbilder aus allen Richtungen zu erzeugen. Eine Hubmechanik sorgt dafür, dass bei Starts, Landungen und den An-/und Abflügen der Kamerakopf in das Flugzeuginnere / Fluggerätinnere gefahren und die Kugelkalotte bei Erreichen des Bildfluggebietes abgesenkt wird.

Die Verfahren zur Erfassung von Luftbildern bei Bildflügen bestehen darin, dass AOS mit ein bis drei Kameras zur automatisierten Erfassung von Schrägluftbildern mithilfe einer eine Kugelkalotte steuernden Rotations-Kinematik eingesetzt werden. Mithilfe der Rotations-Kinematik lassen sich mit drei Kameras ein Senkrechtluftbild und Schrägluftbilder aus allen vier Richtungen erzeugen. Dazu wird der Kamerakopf / die Kugelkalotte nach festen Intervallen um je 90° vor- und zurückgedreht. Eine Hubmechanik sorgt dafür, dass bei Starts, Landungen und den An-/und Abflügen der Kamerakopf in das Fluggerätinnere gefahren und die Kugelkalotte bei Erreichen des Bildfluggebietes abgesenkt wird. Die Verwendung der erfindungsgemäßen Systeme liegt in der Generierung von 3D-Stadtmodellen, in der flächendeckenden Präsentation von Stadtlandschaften für den Katastrophenschutz oder in Geo-Informationssystemen.

Die Erfindung soll anhand von Ausführungsbeispielen näher erläutert werden, ohne auf diese

Beispiele beschränkt zu sein.

### Ausführungsbeispiele

### Beispiel 1: Herstellung von Luftbildern

Zur Herstellung von Senkrechtluftbildern für photogrammetrische Zwecke und von Schrägluftbildern zur Texturierung von 3D- Stadtmodellen (ähnlich dem Pictometry-System von

Blom / Microsoft) sowie zur Entwicklung von Luftbildsystemen mithilfe von AOS (Aero-Oblique-System) werden die AOS mit AIC (Aerial Imagery Corrector - Luftbildkorrektor) Pro Kamera von Rollei Metric ausgestattet, wobei die Kameras zueinander exakt orientiert sind. In einem Einbauschacht befinden sich die IMU (Inertiale Messeinheiten) der Firma IGI mbH

Kreuztal (www.igi-systems.com) und die AeroDiDOS von GGS (Geotechnik &Geoinformatik & Service GmbH - www.ggs-speyer.de). Diese Systeme dienen der automatisierten Erfassung von Schrägluftbildern.

Das erfindungsgemäße Luftbildsystem besteht aus einer digitalen Messkammer AIC P45 (7228 x 5428 Pixel) von Rollei Metric, der Kameraplattform AeroStab von GGS, dem Flight-Managementsystem AeroTopol und einem modernen Flugzeug Aquila A210 mit zwei Bodenluken zur Aufnahme der Plattform und des Laser-Scanners Q560 von Riegl. Die Messkammer AIC-P45 ermöglicht eine Bodenauflösungen ab 5 cm je Pixel. Das beanspruchte Luftbildsystem ist in allen Cessna-172-Flugzeugen weltweit einsetzbar - was mithilfe eines AeroShift-Systems ermöglicht wird.

### Beispiel 2: Automatisierte Erfassung von Schrägluftbildern

Während eines Überfluges werden mithilfe des AOS Schrägluftbilder aus allen vier Richtungen und ein Senkrechtluftbild erzeugt. Alle Bilddaten werden auf Wechselfestplatten gespeichert. Es sind für alle Blickrichtungen 5000 Aufnahmen möglich. Dieses System ist in vorhandene

Bildflugzeuge mit Plattformen (wie z.B. SM 2000) integrierbar.

Das System ist exakt parametrisiert: IMU's (Inertiale Messeinheiten) der Firmen IGI mbH, Kreuztal (www.igi-systems.com) und GGS - Geotechnik &Geoinformatik & Service GmbH (www.ggs-speyer.de mit AeroDiDOS) können eingebaut werden; das erfindungsgemäße AOS kann an jedes Flight Management angeschlossen werden. Die synchrone Auslösung der Kameras und die Abgabe entsprechender Eventsignale ermöglichen die photogrammetrische Weiterverarbeitung der erzeugten Luftbilder. Es kommen AIC-P45 pro Kameras von Rollei mit einem 39 Megapixel Sensor zum Einsatz. Die Einrüstung in ein Bildflugzeug ist in ca. 45 Minuten möglich.

### Beispiel 3: Herstellung von Orthophotos im In- und Ausland

Es lassen sich Senkrechtluftbilder von einzelnen Objekten, Flächen und Trassen erfliegen. Hierbei kommt das erfindungsgemäß entwickelte Luftbildaufnahmesystem zur Anwendung. Es basiert auf der leichten, hochauflösenden, digitalen Luftbildmesskammer AIC-P45 von Rollei (Sensorgröße 7228 x 5428 Pixel).

Dieses System erlaubt den Einsatz kleiner und kostengünstiger Flugzeuge. Somit ist es in diesem Segment der Luftbildherstellung bei erstklassiger Qualität konkurrenzlos.

Das System kann auch im Ausland eingesetzt werden. Es lässt sich unkompliziert in jedes Land der Welt transportieren und in vorhandene (z.B. Cessna-172) Flugzeuge installieren.

Mit modernster GPS-Technik (Global Positioning System) und Sensorik werden die Position, Pitch, Roll, und Drift als Eventdaten für jedes Luftbild gespeichert. Anwendungsgebiete sind:
- Bauwirtschaft, für Planung Dokumentation und Baulogistik im In- und Ausland
- Forschung und Wissenschaft im In- und Ausland
- Energiewirtschaft, zur Überwachung und Erfassung von Freileitungstrassen
- Standortplanung im Städte- und Siedlungsbau
- Grundlage für Planung und Betrieb von (z.B.) Golfplatzanlagen
- Verkehrsanlagen, wie Schifffahrtswege, Autobahnen, Straßen- und Eisenbahnnetze
- Grundlage zur Kartierung
- Unterstützung des Umweltmonitoring.

### Beispiel 4: Aufnahmeprinzip der automatisierten Erfassung von Schrägluftbildern

Die Bildleiste rechts zeigt die Ansicht von Schloss Sanssouci in Potsdam von allen Seiten und ein Senkrechtluftbild. Wollte man in herkömmlicher Weise diese Aufnahmen anfertigen, müsste man 4 mal am Objekt vorbeifliegen und ein weiteres mal für das Senkrechtluftbild. Ein Stadtgebiet so aus der Luft zu erfassen, wäre ökonomisch nicht möglich.

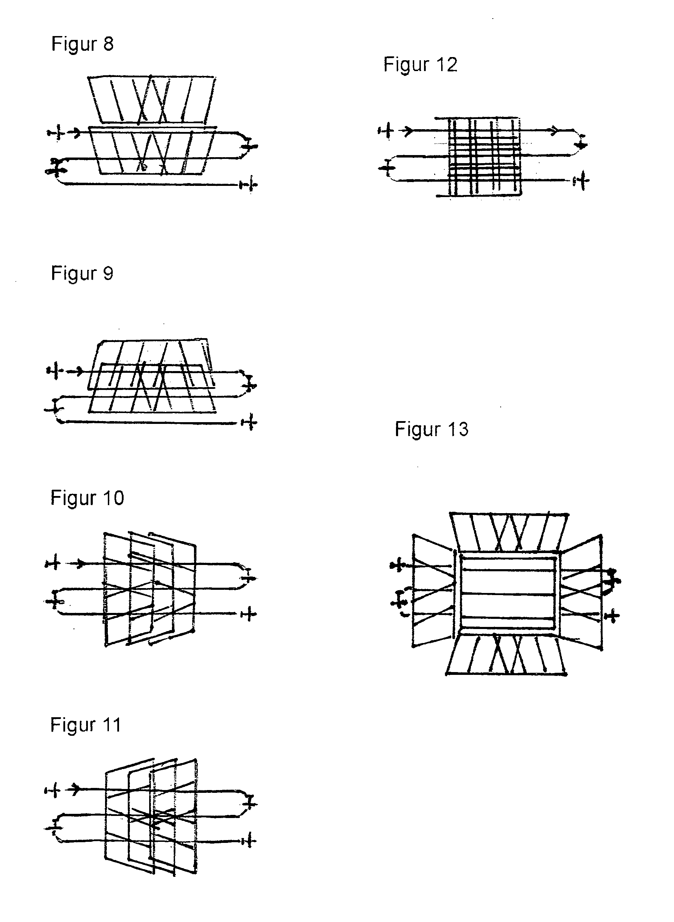

Das erfindungsgemäß entwickelte AOS erreicht dieses Ziel mit einer zeilenweisen Befliegung des entsprechenden Gebietes. Dieses Befliegungskonzept, das in einer Mission durchgeführt wird, liefert eine Vielzahl von Bildern eines Objektes. Dabei ergänzen sich unterschiedliche Blickrichtungen und Blickwinkel. Mindestens vier Seitenansichten und eine Senkrechtansicht eines Objekts sind so garantiert (Figuren 8 bis 13).

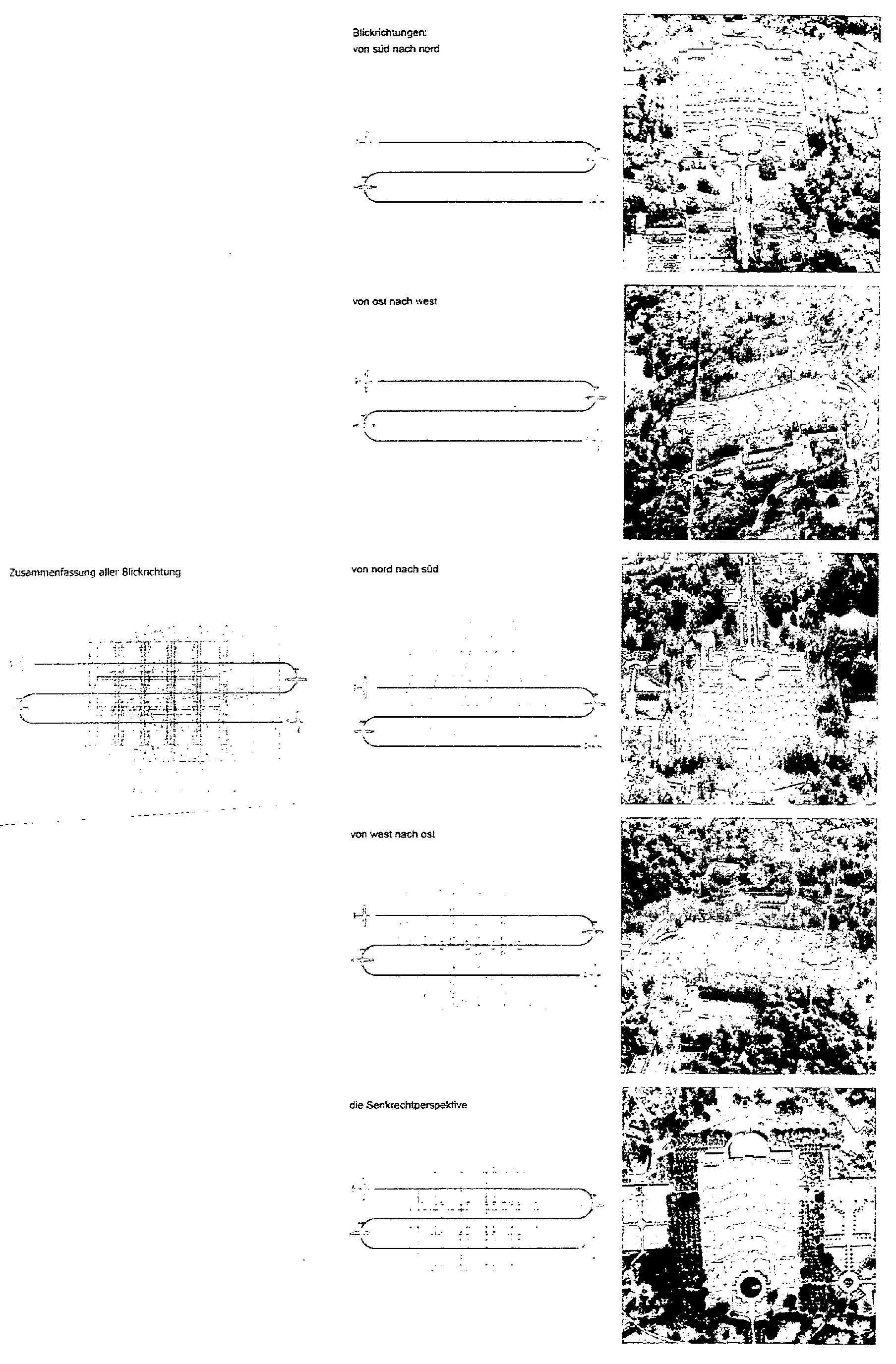

### Beispiel 5: AOS, eingefahren im Flugzeugrumpf

Das Aero-Oblique-System (AOS) besteht aus Kameras (1 und 2 in Figur 1), einem Aufnahmekörper für Befestigungswinkel sowie der Hub- und Drehmechanik (5), einem Hubmotor (6), einer Hubspindelwelle (7), einer Führungsschiene für die Hub- und Drehmechanik (8) und einer aerodynamischen Abdeckung 9 der Kameras (Figur 1).

### Beispiel 6: AOS in Arbeitsposition

Das AOS besteht aus Kameras (1 und 2 in Figur 2), aus Drehmodulen 4 (4.1 und 4.2), dem Aufnahmekörper für Befestigungswinkel sowie der Hub- und Drehmechanik (5), dem Hubmotor (6), der Hubspindelwelle (7), der Führungsschiene für die Hub- und Drehmechanik (8) und der aerodynamischen Abdeckung 9 der Kameras (Figur 2).

### Beispiel 7: AOS in Arbeitsposition - mit um 90° gedrehtem Kamerakopf

Das AOS besteht aus Kameras (1 und 3 in Figur 4), aus Drehmodulen 4 (4.1 und 4.2), dem Aufnahmekörper für Befestigungswinkel sowie der Hub- und Drehmechanik (5), dem Hubmotor (6), der Hubspindelwelle (7), der Führungsschiene für die Hub- und Drehmechanik (8) und der aerodynamische Abdeckung 9 der Kameras (Figur 4).

### Figuren:

Figur 1:
   Das Aero-Oblique-System (AOS) befindet sich eingefahren im Flugzeugrumpf.
Figur 2:
   Das AOS befindet sich in Arbeitsposition; es ist ausgefahren.
Figur 3:
   Blick auf den Kamerakopf / die Kugelkalotte (1 bis 3) von unten, die Kameras 1 und 2 sind nach vom und hinten gerichtet, Kamera 3 ist senkrecht nach unten gerichtet.
Figur 4:
   Das AOS befindet sich in Arbeitsposition; es ist ausgefahren; der Kamerakopf (1 bis 3) wurde um 90° gedreht.
Figur 5:
   Blick auf den Kamerakopf von unten; er wurde um 90° gedreht. Die Kameras 1 und 2 sind nach rechts und links gerichtet, Kamera 3 ist senkrecht nach unten gerichtet.
   Diese Drehung erfolgt alle 4 Sekunden hin und her.
Figur 6:

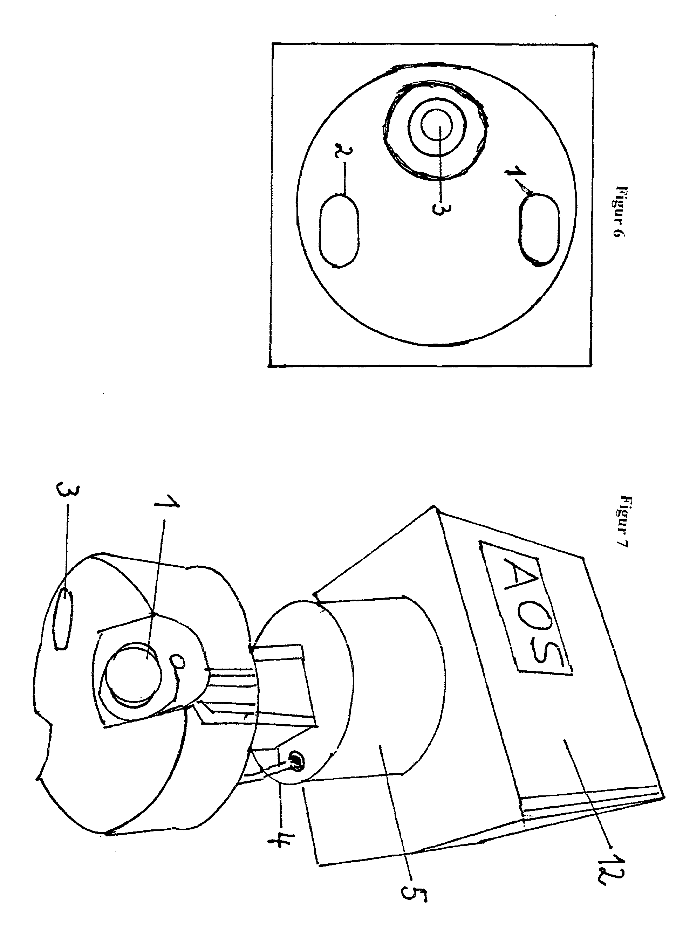

   Figur 6 zeigt den Kamerakopf / die Kugelkalotte (1 bis 3) von unten.
Figur 7:
   AOS mit den Kameras 1 und 3, dem Drehmodul (4), dem Aufnahmekörper (5) für Befestigungswinkel sowie der Hub- und Drehmechanik und dem Gehäuse (12) zur Aufnahme der Steuerelektronik und der Rechner für die Bilddatenaufzeichnungen.
Figuren 8 und 9:
   Die Kameras sind quer zur Flugrichtung gerichtet; es werden alle Objekte links und recht vom Flugzeug erfasst.
Figuren 10 und 11:
   Die Kameras sind längs zur Flugrichtung gerichtet; es werden alle Objekte vor und hinter dem Flugzeug erfasst.
Figur 12:
   Kamera 3 erfasst alle Objekte unter dem Flugzeug.
Figur 13:
   Hier wird verdeutlicht, wie die einzelnen Blickrichtungen bei einem einzigen Überflug - mit einer wechselseitigen Drehung des Kamerakopfes von 90° hin und zurück und gleichzeitiger Auslösung aller Kameras - alle Objekte am Boden von mindestens vier Seiten abgebildet werden.

### Abkürzungsverzeichnis

- AlC: Luftbildkorrektor (Aerial Imagery Corrector)
- AOS: Aero-Oblique-System
- DOM: Digitales Oberflächenmodell (a. Plural)
- GGS: Firma Geotechnik &Geoinformatik & Service GmbH
- GPS: Global Positioning System
- IGI: Firma IGI mbH, Kreuztal (www.igi-systems.com)
- IMU: Inertiale Messeinheiten

### Bezugszeichenliste

- 1: Kamera 1
- 2: Kamera 2
- 3: Kamera 3
- 1 - 3: Kamerakopf / Kugelkalotte
- 4: Drehmodule
- 5: Aufnahmekörper für Befestigungswinkel, Hub- und Drehmechanik
- 6: Hubmotor
- 7: Hubspindelwelle
- 8: Führungsschiene für Hub- und Drehmechanik
- 9: aerodynamische Abdeckung der Kameras
- 10: Flugzeugrumpf, Außenseite
- 11: Befestigungsebene, Flugzeuginnenboden
- 12: Gehäuse zur Aufnahme der Steuerelektronik und der Rechner zu Bilddatenaufzeichnungen

## Patentansprüche

1. Systeme zur Erfassung von Luftbildern bei Bildflügen, **gekennzeichnet durch** den Einsatz von AOS - Aero-Oblique-System - mit ein bis drei Kameras in einer rotierenden Kugelkalotte zur automatisierten Erfassung von Schrägluftbildern.

2. Systeme nach Anspruch 1, **gekennzeichnet durch** die automatisierte Erfassung von Schrägluftbildern mithilfe einer die Kugelkalotte steuernden Rotations-Kinematik.

3. Systeme nach Anspruch 1 und 2, **dadurch gekennzeichnet, dass** sie eine Rotations-Kinematik enthalten, mit der aus drei Kameras ein Senkrechtluftbild und Schrägluftbilder aus allen Richtungen erzeugt werden.

4. Systeme nach Anspruch 1 und 2, **dadurch gekennzeichnet, dass** Hard- und Software zur Steuerung der Kinematik und die Bilddatenspeicherung des AOS sich innerhalb des Gerätes befinden und aus drei Zuleitungen - Stromversorgung, Auslösung und Auslöserückmeldung - bestehen.

5. Systeme nach Anspruch 1 und 2, **dadurch gekennzeichnet, dass** sie ferner aus einer digitalen Messkammer, einer Kameraplattform, einem Einbauschacht und aus einem Fluggerät mit Bodenluken zur Aufnahme der Plattform und eines Laser-Scanners bestehen.

6. Systeme nach Anspruch 1 bis 5, **dadurch gekennzeichnet, dass** sie eine Hubmechanik enthalten, mithilfe derer bei Starts, Landungen und bei An-/und Abflügen der Kamerakopf in das Fluggerätinnere gefahren und die Kugelkalotte bei Erreichen des Bildfluggebietes abgesenkt wird.

7. Aero-Oblique-System (AOS) nach einem der Ansprüche 1 bis 6 zur Erfassung von Luftbildern bei Bildflügen, bestehend aus ein bis drei Kameras in einer rotierenden Kugelkalotte, wobei sie maximal drei Kameras mit 39 Mega Pixel oder minimal eine Kamera mit 12 Mega Pixel enthalten und die automatisierte Erfassung von Schrägluftbildern mithilfe einer die Kugelkalotte steuernden Rotations-Kinematik erfolgt.

8. Aero-Oblique-System nach Anspruch 7, eingefahren im Flugzeugrumpf, bestehend aus Kameras (1 und 2 in Figur 1), einem Aufnahmekörper für Befestigungswinkel sowie einer Hub- und einer Drehmechanik (5), einem Hubmotor (6), einer Hubspindelwelle (7), einer Führungsschiene für die Hub- und Drehmechanik (8) und einer aerodynamische Abdeckung 9 der Kameras (Figur 1).

9. Aero-Oblique-System nach Anspruch 7 in Arbeitsposition, bestehend aus Kameras (1 und 2 in Figur 2), aus Drehmodulen 4 (4.1 und 4.2), dem Aufnahmekörper für Befestigungswinkel sowie der Hub- und Drehmechanik (5), dem Hubmotor (6), der Hubspindelwelle (7), der Führungsschiene für die Hub- und Drehmechanik (8) und der aerodynamische Abdeckung 9 der Kameras (Figur 2).

10. Aero-Oblique-System nach Anspruch 7 und 9 in Arbeitsposition, aber mit um 90° gedrehtem Kamerakopf (1 bis 3), bestehend aus den Kameras (1 und 3 in Figur 4), aus Drehmodulen 4 (4.1 und 4.2), dem Aufnahmekörper für Befestigungswinkel sowie der Hub- und Drehmechanik (5), dem Hubmotor (6), der Hubspindelwelle (7), der Führungsschiene für die Hub- und Drehmechanik (8) und der aerodynamische Abdeckung 9 der Kameras (Figur 4).

11. Verfahren zur Erfassung von Luftbildern bei Bildflügen, **dadurch gekennzeichnet, dass** AOS - Aero-Oblique-System - mit ein bis drei Kameras zur automatisierten Erfassung von Schrägluftbildern mithilfe einer eine Kugelkalotte steuernden Rotations-Kinematik eingesetzt werden.

12. Verfahren nach Anspruch 11, **dadurch gekennzeichnet, dass** mithilfe der Rotations-Kinematik mit drei Kameras ein Senkrechtluftbild und Schrägluftbilder aus allen vier Richtungen erzeugt werden und dazu der Kamerakopf / die Kugelkalotte nach festen Intervallen um je 90° vor- und zurückgedreht wird.

13. Verfahren nach Anspruch 11 und 12, **dadurch gekennzeichnet, dass** mithilfe einer Hubmechanik bei Starts, Landungen und den An-/und Abflügen der Kamerakopf in das Fluggerätinnere gefahren und die Kugelkalotte bei Erreichen des Bildfluggebietes abgesenkt wierd.

14. Verwendung der Systeme nach Anspruch 1 bis 10 zur Generierung von 3D-Stadtmodellen, zur flächendeckenden Präsentation von Stadtlandschaften für den Katastrophenschutz oder für Geo-Informationssysteme.
